# EUROPÄISCHE PATENTANMELDUNG

(11) **EP 1 650 008 A1**
(43) Veröffentlichungstag der Anmeldung: **26.04.2006**
(21) Anmeldenummer: 05020529.3
(22) Anmeldetag: 21.09.2005
(51) Int. Cl.: B29C 51/16, B29C 45/14, B29C 49/24, B65D 23/08, B29C 70/78

(54) **Behälter**

(30) Priorität: 23.10.2004 DE 102004051681
(71) Anmelder: Jazbinsek, Anton, 88069 Tettnang (DE)
(72) Erfinder: Jazbinsek, Anton, 88069 Tettnang (DE)
(74) Vertreter: Engelhardt, Guido

(57) **Zusammenfassung**

Bei einem Behälter (1) aus einem thermisch verformbaren Kunststoff, dessen Außenmantelfläche (5) mit einem Etikett (11) abgedeckt ist, ist dieses aus einem zellulosehaltigem Material, insbesondere Papier, hergestellt und mit seiner Siebseite (13) mit dem Behälter (1) durch Anschmelzen der Außenmantelfläche (5) bei dessen Ausformung fest verbunden. Auf der Filzseite (14) ist das Etikett (11) bedruckt.

Durch diese Ausgestaltung ist es möglich, ein Etikett (11) aus Papier zu verwenden, so dass die Herstellkosten des Behälters (1) reduziert werden. Außerdem ist ein kostengünstige Entsorgung des Behälters (1) zu bewerkstelligen, da dieser mit seinem Etikett (11) aus Papier als Mischprodukt einzustufen ist und somit nur ein Bruchteil an Entsorgungskosten gegenüber Vollkunststoffprodukten zu zahlen sind.

## Beschreibung

Die Erfindung bezieht sich auf einen Behälter aus einem thermisch verformbaren Kunststoff, dessen Außenmantelfläche ganz oder teilweise mit einem Etikett z.B. in Form eines bedruckten Werbeträgers abgedeckt ist, sowie ein Verfahren zur Herstellung eines solchen Behälters.

Zur Aufnahme von pastösen, flüssigen oder schüttfähigen Gütern sind Behälter in einer großen Anzahl unterschiedlicher Ausgestaltungen, insbesondere als Joghurtbecher, Süßwarenverpackung und als Getränkeflaschen, bekannt. Die Außenmantelflächen dieser Behälter sind hierbei als Werbeträger gestaltet, um den Inhalt der Behälter einem breiten Publikum bekannt zu machen.

Da die Außenmantelfläche der Behälter nur mit sehr großem Aufwand unmittelbar bedruckt werden kann, werden als Werbeträger Etiketten vorgesehen, auf denen auf einfache Weise Druckmotive aufgetragen werden können und die leicht an den Behältern zu befestigen sind. Die Etiketten bestehen hierbei aus einer Kunststofffolie und werden nach dem Bedrucken durch Schrumpfen oder Kleben nachträglich auf der Außenmantelfläche des Behälters befestigt.

Auf diese Weise sind sehr ansprechende Verpackungsbehälter geschaffen. Deren Entsorgung nach Verbrauch des bevorrateten Gutes erfordert aber einen außerordentlich hohen finanziellen Aufwand. Zwar können die Behälter mit Deckel und Werbeträger, die vollständig aus Kunststoff bestehen, verbrannt oder durch Zermahlen recycelt werden, die zu entrichtenden staatlichen Gebühren stehen aber in keinem Verhältnis zu den Herstellkosten, so dass dadurch die in derartigen Behältern eingelagerten Güter in einem erheblichen Maße verteuert werden.

Aufgabe der Erfindung ist es daher, einen Behälter zur Bevorratung von Gütern zu schaffen, der zwar in gleicher Weise verwendbar ist wie die bekannten Behälter, für den aber keine oder nur geringe staatliche Gebühren zu entrichten sind, so dass der Anteil an Fremdkosten gering ist und dessen Entsorgung ohne großen finanziellen Aufwand zu bewerkstelligen ist. Des Weiteren soll der Behälter ohne Schwierigkeiten wirtschaftlich herstellbar und vielseitig verwendbar sein.

Gemäß der Erfindung wird dies bei einem Behälter der eingangs genannten Gattung dadurch erreicht, dass das Etikett aus einem zellulosehaltigen Material, insbesondere Papier, hergestellt ist, dass das Etikett mit seiner Siebseite mit dem Behälter durch Anschmelzen der Außenmantelfläche des Behälters bei dessen Ausformung fest verbunden ist und dass das Etikett auf seiner Filzseite bedruckt ist.

Das Etikett kann hierbei auf einfache Weise in einer in die Außenmantelfläche des Behälters eingeformten, vorzugsweise umlaufenden Freisparung angeordnet sein, wobei die Freisparung um die Materialstärke des Etiketts gegenüber der Außenmantelfläche des Behälters zurückgesetzt ausgebildet sein sollte.

Das Verfahren zur Herstellung eines derartigen Behälters ist dadurch gekennzeichnet, dass bei einem durch Spritzgießen, durch Blasen oder durch Tiefziehen hergestellten Behälter das Etikett vor dem Ausformen des Behälters in das Werkzeug in dem Bereich, in dem das Etikett an dem Behälter anzubringen ist, eingelegt wird und durch Anschmelzen der Außenmantelfläche des Behälters bei dessen Ausformung das Etikett mit diesem fest verbunden wird. Die Ausformung des Behälters kann hierbei bei einer Temperatur um 270° C vorgenommen werden.

Wird bei einem aus einem thermisch verformbaren Kunststoff bestehenden Behälter das auf dessen Außenmantelfläche aufgebrachte als Werbeträger vorgesehene Etikett aus Papier hergestellt, so werden nicht nur die Herstellkosten des Behälters gegenüber den bisher verwendeten Behältern reduziert, da ein Etikett aus Papier erheblich günstiger zu fertigen ist als ein Etikett aus einer Kunststofffolie, sondern es ist auch eine kostengünstige Entsorgung des Behälters zu bewerkstelligen. Behälter mit einem Etikett aus Papier werden nämlich als Mischprodukte eingestuft, für die gegenüber Vollkunststoffprodukten nur ein Bruchteil an Entsorgungsgebühren zu zahlen sind. Bei nahezu gleichem Eigengewicht, gleicher Haltbarkeit und ohne dass Beschränkungen bei der Verwendung in Kauf zu nehmen sind, bietet der vorschlagsgemäß ausgebildete Behälter somit erhebliche Vorteile wirtschaftlicher Art.

In der Zeichnung sind Ausführungsbeispiele eines mit einem aus Papier bestehenden Etikett versehenen thermisch verformbaren Behälters und dessen unterschiedliche Herstellungsverfahren dargestellt und nachfolgend im Einzelnen erläutert. Hierbei zeigt:
- Figur 1: einen mit einem Etikett aus Papier versehenen Behälter, in Ansicht,
- Figur 2: das bei dem Behälter nach Figur 1 verwendete Etikett, in einer Abwicklung,
- Figur 3: einen Schnitt nach der Linie III - III der Figur 2, in einer vergrößerten Wiedergabe,
- Figur 4: den Behälter nach Figur 1 in einem Teilschnitt mit einem eingelegten Etikett,
- Figur 5: den Behälter nach Figur 1 bei dessen Herstellung in einem Spritzgusswerkzeug,
- Figur 6: den aus dem Werkzeug nach Figur 5 ausgeformten Behälter in einer Explosionsdarstellung,
- Figur 7: ein Werkzeug zur Herstellung des Behälters nach Figur 1 durch Blasen und
- Figur 8: ein Werkzeug zur Herstellung des Behälters nach Figur 1 durch Tiefziehen.

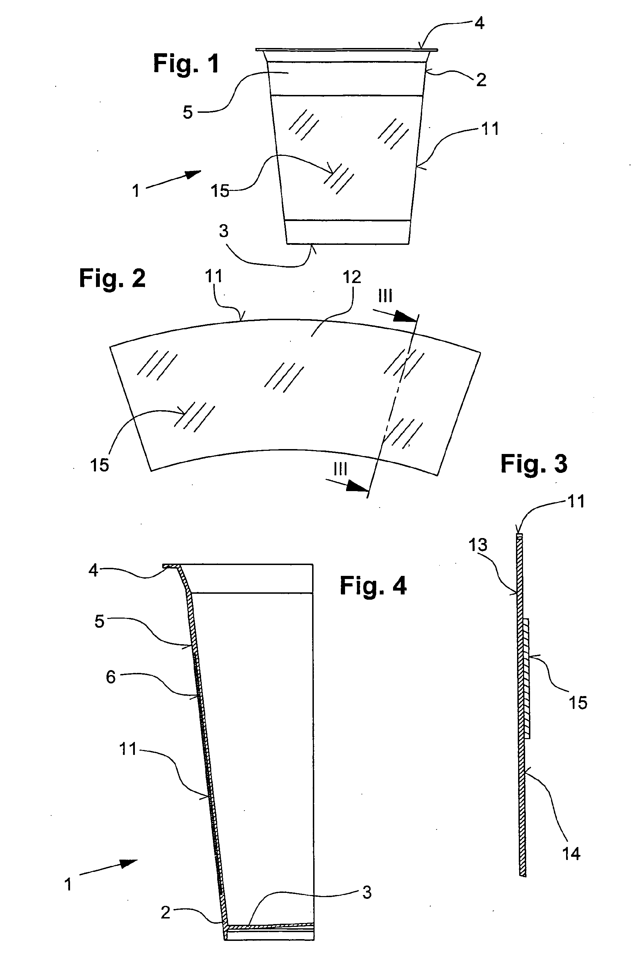

Der in den Figuren 1, 4 und 6 dargestellte und jeweils mit 1 bezeichnete Behälter ist in Form eines Bechers ausgebildet und dient zur Aufnahme von pastösen, flüssigen oder schüttfähigen Gütern. An einem Mantel 2 des Behälters 1 sind hierbei ein Boden 3 sowie ein Formteil als Siegelrand 4 angeformt, auf den ein nicht dargestellter Verschlussdeckel aufzusiegeln ist. Um den Inhalt des Behälters 1 insbesondere Kunden nahe zu bringen, ist auf der Außenmantelfläche 5 des Mantels 2 ein Etikett 11 angebracht, das als Werbeträger ausgebildet und auf der Außenseite mit Druckmotiven 15 versehen ist.

Das Etikett 11 ist aus einem zellulosehaltigen Werkstoff, wie z.B. einem dünnwandigen Papier, hergestellt, das, wie dies den Figuren 2 und 3 zu entnehmen ist, als Kreisringabschnitt 12 gestaltet ist. Die Siebseite 13 des Etikettes 11 liegt hierbei an der Außenmantelfläche 5 des Mantels 2 an, auf der Filzseite 14 sind Druckmotive 15, wie z.B. Bilddarstellungen oder Beschriftungen, aufgedruckt. Das Etikett 11 kann auch, wie dies in Figur 3 gezeigt ist, in einer in den Mantel 2 des Bechers 1 vorgesehenen Freisparung 6 angeordnet sein.

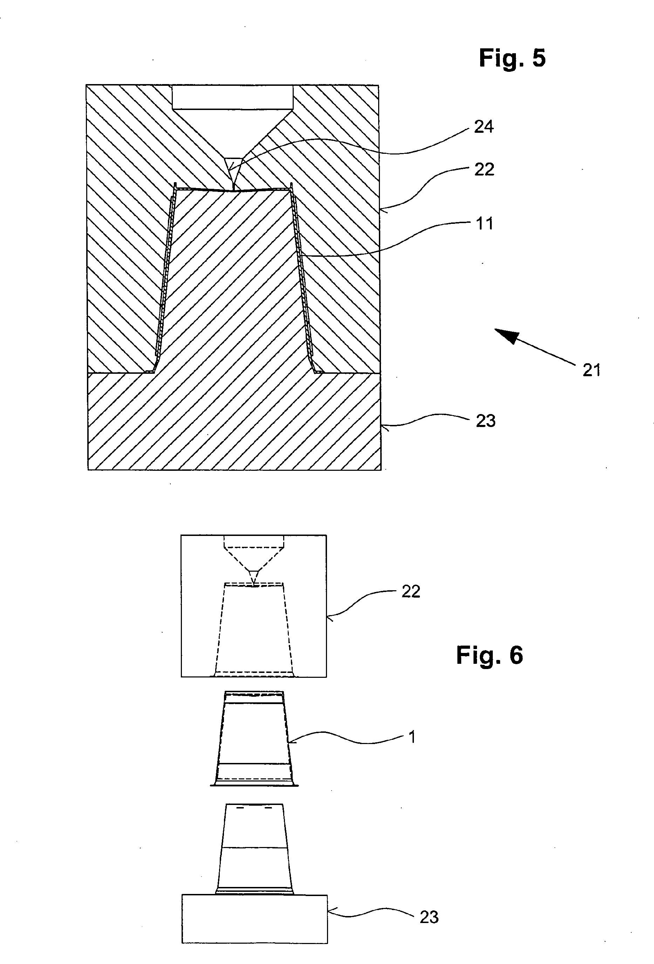

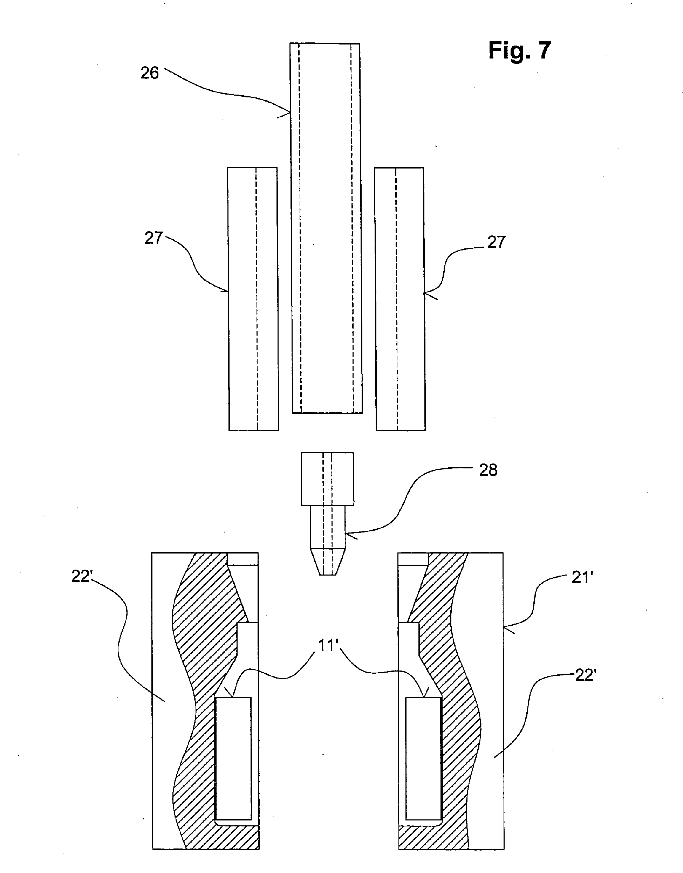

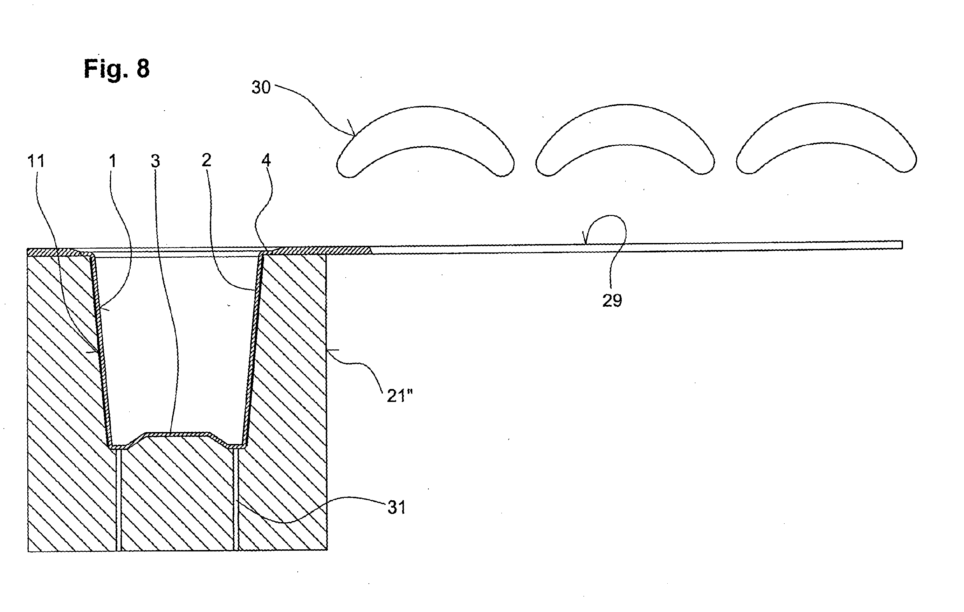

Der Becher 1 kann im Spritzgießverfahren (Figuren 5 und 6), durch Blasen (Figur 7) oder durch Tiefziehen (Figur 8) hergestellt werden. Dabei werden, bevor der Behälter 1 ausgeformt wird, das Etikett 11 (Figur 5 und 8) bzw. zwei Etikettenteile 11' (Figur 7) in das Formwerkzeug 21, 21' bzw. 21" eingelegt, so dass bei der Einbringung des den Becher 1 bildenden Kunststoffes das Etikett 11 bzw. 11' durch Anschmelzen der Außenmantelfläche 5 des Mantels 2 fest mit diesem verbunden wird.

Gemäß Figur 5 besteht das Formwerkzeug 21 aus einer Matrize 22 und einem Stempel 23, zwischen denen zur Ausformung des Behälters 1 ein Freiraum vorgesehen ist. Der flüssige Kunststoff wird hierbei über eine Düse 24 bei einer Temperatur um 270° C in das Formwerkzeug 21, an dessen Matrize 22 das aus Papier bestehende Etikett 11 anliegt, eingebracht, so dass dieses mit der Ausformung des Behälters 1 an diesem fest verbunden wird.

Nach Figur 7 wird der nicht eingezeichnete Behälter durch Aufblasen eines Schlauches 26, der mittels Heizkörper 27 vor dem Einbringen in das aus zwei Formbacken 22' gebildete Formwerkzeug 21' ausgeformt. Das zweiteilige Etikett 11' liegt hierbei in den Formbacken 27 und verbindet sich mit der Außenmantelfläche des Schlauches 26, sobald dieser mittels über eine Düse 28 eingebrachter Druckluft sich an den Formbacken 21' anliegt.

Auch bei der Verfahrensweise nach Figur 8 ist das Etikett 11 in das Formwerkzeug 21" eingelegt und verbindet sich mit der Außenmantelfläche 5 des Mantels 2, sobald der Becher 1 durch Evakuieren des Formwerkzeuges 21", in dem über Bohrungen 31 die Luft abgesaugt wird, ausgeformt wird. Das Kunststoffmaterial wird dazu dem Formwerkzeug 21" als Platte 29 zugeführt, die mittels Heizstrahler 30, um die Verformung zu ermöglichen, erwärmt wird.

Das aus Papier bestehende Etikett 11 wird bei der Ausformung des Behälters 1 jeweils durch Anschmelzen der Oberfläche des Mantels 5 bei einer Temperatur um 270° C fest mit dem Behälter 1 verbunden.

## Patentansprüche

1. Behälter (1) aus einem thermisch verformbaren Kunststoff, dessen Außenmantelfläche (5) ganz oder teilweise mit einem Etikett (11), z.B. in Form eines bedruckten Werbeträgers, abgedeckt ist,
**dadurch gekennzeichnet,**
**dass** das Etikett (11) aus einem zellulosehaltigen Material, insbesondere Papier, hergestellt ist, dass das Etikett (11) mit seiner Siebseite (13) mit dem Behälter (1) durch Anschmelzen der Außenmantelfläche (5) des Behälters (1) bei dessen Ausformung fest verbunden und dass das Etikett (11) auf seiner Filzseite (14) bedruckt ist.

2. Behälter nach Anspruch 1,
**dadurch gekennzeichnet,**
**dass** das Etikett (11) in einer in die Außenmantelfläche (5) des Behälters (1) eingeformten, vorzugsweise umlaufenden Freisparung (6) angeordnet ist.

3. Behälter nach Anspruch 2,
**dadurch gekennzeichnet**
**dass** die Freisparung (6) des Behälters (1) um die Materialstärke des Etikettes (11) gegenüber der Außenmantelfläche (5) des Behälters (1) zurückgesetzt ausgebildet ist.

4. Verfahren zur Herstellung eines nach einem oder mehreren der Ansprüche 1 bis 3 ausgebildeten Behälters,
**dadurch gekennzeichnet,**
**dass** bei einem durch Spritzgießen, durch Blasen oder durch Tiefziehen hergestellten Behälter (1) das Etikett (11) vor dem Ausformen des Behälters (1) in das Werkzeug (21) in dem Bereich, in dem das Etikett (11) an dem Behälter (1) anzubringen ist, eingelegt und durch Anschmelzen der Außenmantelfläche (5) des Behälters (1) bei dessen Ausformung mit diesem fest verbunden wird.

5. Verfahren zur Herstellung eines nach einem oder mehreren der Ansprüche 1 bis 4,
**dadurch gekennzeichnet,**
**dass** die Ausformung des Behälters (1) bei einer Temperatur von ca. 270 ° C vorgenommen wird.
